# EUROPEAN PATENT SPECIFICATION

(11) **EP 2 456 693 B1**
(45) Date of publication and mention of the grant of the patent: **17.08.2016**
(21) Application number: 10730961.9
(22) Date of filing: 07.07.2010
(51) Int. Cl.: B65G 17/24, B65G 47/68

(54) **ROLLER-BELT SORTER WITH CONTROL GRID**
ROLLRIEMENSORTIERVORRICHTUNG MIT STEUERGITTER
TRIEUSE À COURROIE SUR ROULEAUX POURVUE D'UNE GRILLE DE COMMANDE

(30) Priority: 24.07.2009 US 509207
(43) Date of publication of application: 30.05.2012
(73) Proprietor: Laitram, LLC, Harahan, LA 70123 (US)
(72) Inventor: FOURNEY, Matthew, L., Laurel Maryland 20723 (US)
(74) Representative: Walker, Ross Thomson
(86) International application number: PCT/US2010/041124
(87) International publication number: WO 2011/011195

(56) References cited:
- EP-A1- 1 375 389
- WO-A1-00/76887
- DE-A1-102004 022 060
- GB-A- 2 434 569
- US-A1- 2003 141 165
- US-A1- 2004 104 100
- US-A1- 2006 249 355
- US-A1- 2008 217 138
- US-A1- 2009 173 598
- US-B1- 7 007 792

## Description

### BACKGROUND

The invention relates generally to power-driven conveyors and, more particularly, to a sorting system using a conveyor belt having article-supporting rollers that are selectively rotated in individual control cells arranged in a grid through which the belt passes.

Shoe sorters, pusher bars, and diverting rails are used to sort packages and other articles on a conveyor. In high-density package flows, it is often necessary to unscramble side-by-side packages before sorting to prevent one package from blocking another's exit off the conveyor. But a conveyor used to unscramble packages before they are diverted takes up space. And unscrambling packages of various sizes and orientation in a mass flow is difficult, especially at high throughput rates.

Thus, there is a need for a sorter that can sort a variety of package sizes at a high throughput rate without taking up too much floor space.

WO 00/76887 A1 discloses a system according to the preamble of claim 1.

### SUMMARY

This need and other needs are addressed by a sorting system embodying features of the invention including a sorting conveyor according to claim 1 with a control system. The sorting conveyor includes a conveyor belt that advances in the direction of belt travel. The belt has article-supporting belt rollers that can rotate in a direction transverse to the direction of belt travel. The sorting conveyor also includes control elements arranged in a grid of multiple rows and columns of individually controlled grid cells. The control elements selectively rotate the belt rollers as they pass through the grid cells. A control system includes means for sensing the size and position of each article entering the belt. A trajectory along the conveyor belt is computed for each article based on its size and position on entering the belt by means for computing a trajectory. Each grid cell is selectively controlled according to the trajectories to divert articles transversely across the sorting conveyor along the trajectories.

In another aspect of the invention, a method for sorting a flow of articles according to claim 9 comprises:
(a) receiving a flow of articles atop belt rollers in a conveyor belt advancing in a direction of belt travel; (b) imaging the articles to determine their sizes and positions on entering the conveyor belt; (c) computing a trajectory for each article from its size and position; (d) selectively actuating the belt rollers to rotate transverse to the direction of belt travel according to the trajectories. In this way, articles are diverted across the conveyor belt along the trajectories.

Another version of the sorting conveyor includes a sorting conveyor that has rollers arranged in a grid of multiple rows and columns of individually controlled grid cells. A control system determines the size and position of each article entering the sorting conveyor, computes a trajectory for each article along the sorting conveyor from the article's size and position, and selectively controls the rollers in each grid cell according to the trajectories computed for the articles to actuate the rollers to divert articles across the sorting conveyor along the trajectories.

### BRIEF DESCRIPTION OF THE DRAWINGS

These features and aspects of the invention, as well as its advantages, are better understood by referring to the following description, appended claims, and accompanying drawings, in which:
FIG. 1 is an isometric pictorial of a sorting system embodying features of the invention;
FIG. 2 is a top plan of the sorting system of FIG. 1;
FIG. 3 is a top plan view of a portion of the sorting conveyor in the sorting system of FIG. 1;
FIG. 4 is a partly exploded top isometric view of an actuation grid for a sorting system as in FIG. 1;
FIG. 5 is a bottom isometric view of the actuation grid of FIG. 4;
FIG. 6 is an enlarged top plan view of a grid cell of the actuation grid of FIG. 4 in a deactuated position;
FIG. 7 is an enlarged bottom view of the grid cell of FIG. 6 in a deachiated position;
FIG. 8 is an enlarged top plan view as in FIG. 6 with the grid cell in an actuated position;
FIG. 9 is an enlarged view as in FIG. 7 with the grid cell in an actuated position;
FIG. 10 is a block diagram of a control system usable in the sorting system of FIG. 1;
FIGS. 11A-11E illustrate the control sequence for one example arrangement of packages on the sorting conveyor in the sorting system of FIG. 1; and
FIG. 12 is a flowchart of one version of control logic usable in the control system of the sorting system of FIG. 1.

### DETAILED DESCRIPTION

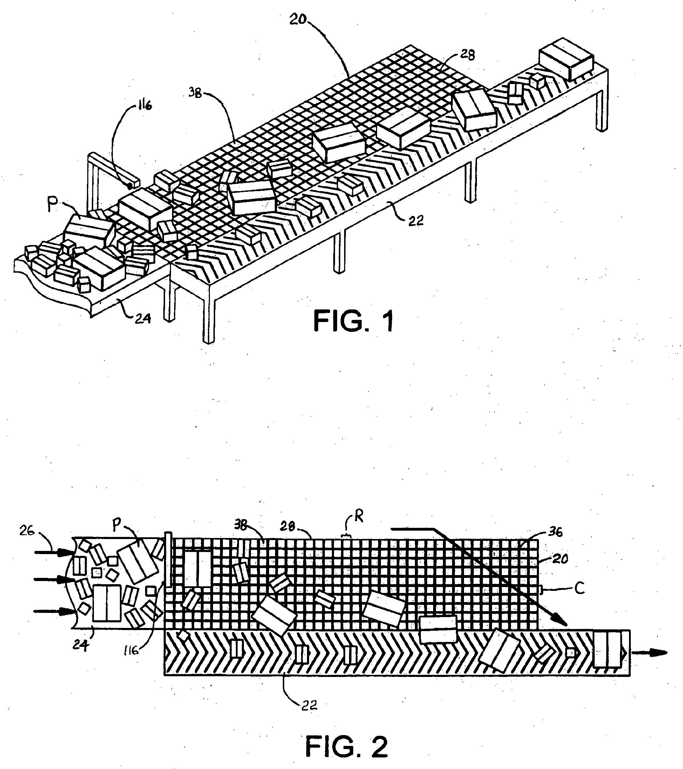

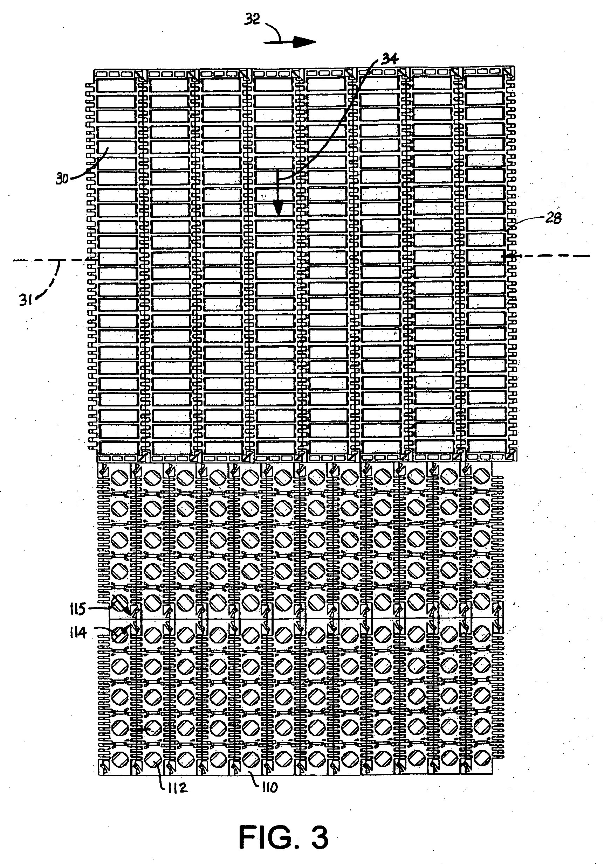

A sorting system embodying features of the invention is shown in FIGS. 1 and 2. An incoming mass flow of a variety of articles, such as boxes or packages P, is sorted in a sorting conveyor 20 and transferred onto an abutting outbound singulating conveyor 22. The mass flow of packages, randomly oriented and positioned, is fed onto the sorting conveyor by an infeed conveyor 24 advancing in a conveying direction 26. The infeed conveyor may be realized as a powered roller conveyor, a flat belt, a modular conveyor belt, a chute, or the like. The sorting conveyor comprises a conveyor belt 28 having package-supporting rollers 30 (FIG. 3) arranged to rotate on axes 31 perpendicular, or transverse, to the direction of belt travel 32, which is in the conveying direction. The package-supporting belt rollers may be actively rotated in the direction of arrow 34 to divert packages toward the singulating conveyor 22.

The transverse rollers in the sorting-conveyor belt 28 are selectively rotated in a grid 36 of individually actuated zones, or grid cells 38, arranged in rows R and columns C along the sorting conveyor's carryway. In one embodiment, the rollers 30 in the sorting-conveyor belt 28 extend through the thickness of the belt so that they can be rotated by rolling contact with bearing surfaces underlying the belt as the belt advances in the direction of belt travel. One example of such a belt is the Intralox^{®} Series 7000 belt manufactured and sold by Intralox, L.L.C. of Harahan, Louisiana, U.S.A.

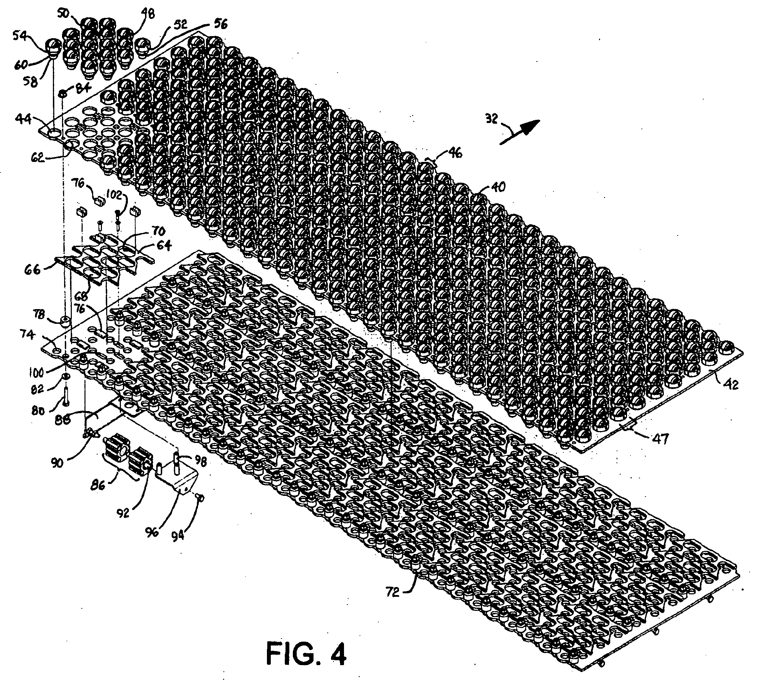

An exploded view of a portion of the bearing surfaces underlying the belt is shown in FIG. 4. The belt rollers are supported atop an array of control elements-in this example, diverting rollers 40 positioned along the carryway. The peripheral surfaces of the diverting rollers serve as the bearing surfaces.

The diverting rollers are mounted on a carryway pan 42, which is itself mounted in a conveyor frame (not shown). The pan is perforated with a plurality of circular openings 44 arranged in longitudinal columns 46 and lateral, or transverse, rows 47. The columns of openings are laterally aligned with the lateral positions of the belt rollers. Each opening rotatably receives a cartridge 48 supporting a freely rotatable diverting roller 40, which engages the belt rollers in the corresponding column as the belt advances in the direction of belt travel. The rolling contact between the belt rollers and the diverting rollers causes them both to roll on each other and rotate as long as their axes are oblique to each other.

The diverting roller cartridge 48 includes a retainer ring 50 with diametrically opposite holes 52 supporting the ends of an axle received in a bore in the diverting roller 40. One of the holes can be a through hole through which the axle can be inserted into the cartridge and the diverting roller, and the other hole can have a blind end forming an end stop for the axle. In this way, the diverting roller is retained in the cartridge along a fixed axis with a salient portion of the roller protruding beyond the top of the retainer ring. Extending downward from the retainer ring encircling the diverting roller is an upper journal stem 54 having a cylindrical outer periphery indented inward from the ring to form a shoulder 56 between the peripheries of the ring and the stem. A lower journal stem 58 distal from the retainer ring has a smaller diameter than the upper journal stem. The periphery of the lower journal stem is indented inward of the periphery of the upper journal stem. A cartridge gear 60 is disposed between the upper stem and the lower stem. The cartridge gear is preferably a spur gear with peripheral teeth whose tips do not extend past the periphery of the upper journal stem.

The cartridges 48 are received in the openings 44 in the carryway pan as shown in FIG. 4. The walls of the openings form bearing surfaces 62 against which the upper journal stems can rotate. Because the diameter of the retainer rings exceeds the diameter of the openings, the ring's shoulder 56 rests atop the carryway pan with the smaller-diameter stems and gear portions suspended below.

A plurality of gear plates 64 are movably positioned below the carryway pan. Each gear plate defines one of the individually actuatable grid cells. Actuated gears in the form of rack gears 66 are disposed on the gear plates. Each rack gear is positioned to engage the teeth of one of the cartridge gears to form a rack-and-pinion system that can rotate its cartridges in unison as the gear plate is translated. The gear plate has elongated openings 68 bounded on one side by a linear array of teeth 70 forming a rack gear. Each elongated opening 68 is positioned below one of the openings 44 in the carryway pan. The lower journal stem extends through the elongated openings in the gear plates, which are sandwiched between two other plates: the carryway pan 42 and a bottom plate 72. The bottom plate, which is stationarily affixed to a portion of the conveyor frame, has a plurality of openings 74 vertically aligned with, but having a smaller diameter than, the openings in the carryway pan. The openings 74 are sized to rotatably receive the lower journal stems 58 of the cartridges. This helps align the upper and lower support plates to facilitate assembly of the roller drive mechanism and also confines the rotatable cartridges in rotation on fixed vertical axes.

Confronting spacer pads 76 on the top of the bottom plate 72 and on the bottom of the top plate 42 maintain the proper spacing between the two plates and the movable gear plates 64. Spacers 78, fastened by bolts 80, washers 82, and nuts 84, maintain the spacing between the carryway pan and the bottom plate 72.

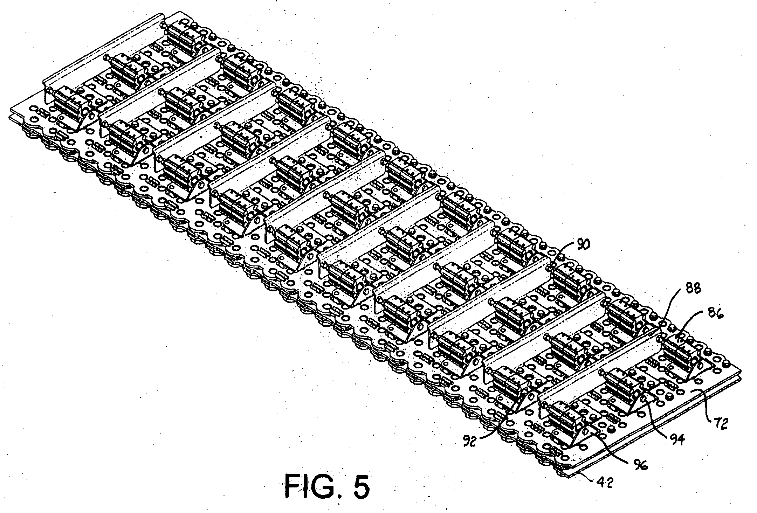

Each gear plate 64 is translated by an individual linear actuator 86, such as an air cylinder, an electrical actuator, or a mechanical actuator. As shown in FIG. 5, actuators in each grid cell column are attached at one end to a mounting bracket 88 mounted to the bottom of the bottom plate 72 by a coupling 90. The extension of an extension rod 92 from the other end of the actuator is connected by a coupling 94 to an actuator plate 96. Three internally threaded posts 98 extend upward from the actuator plate through slots 100 in the bottom plate. Three flathead screws 102 extend through the gear plate 64 into the posts to attach the gear plate to the associated actuator plate. The extension rod translates the actuator plate and the gear plate, the rod's extension determining the position of the gear plate and the orientation of the diverting rollers.

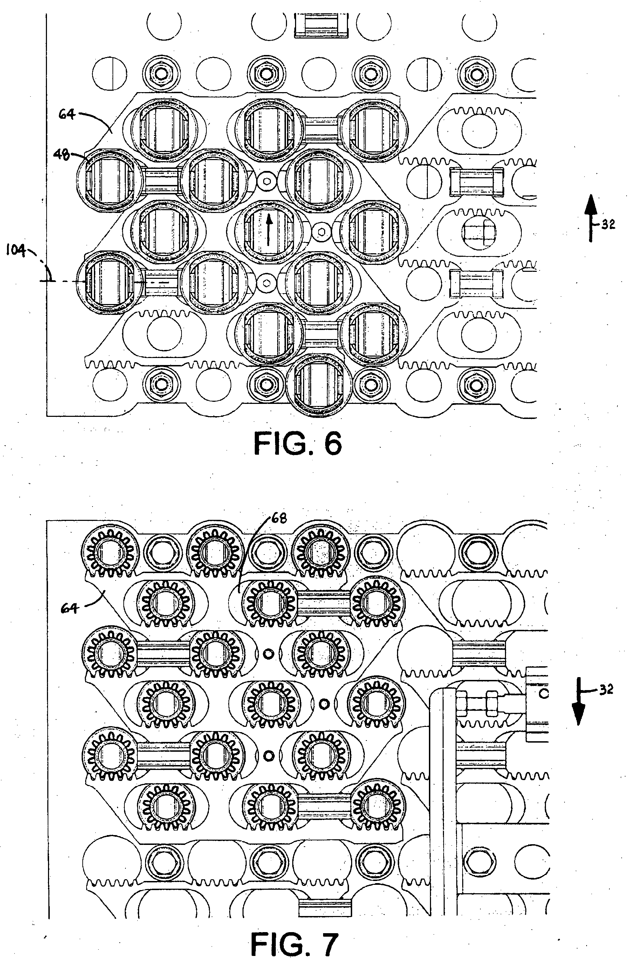

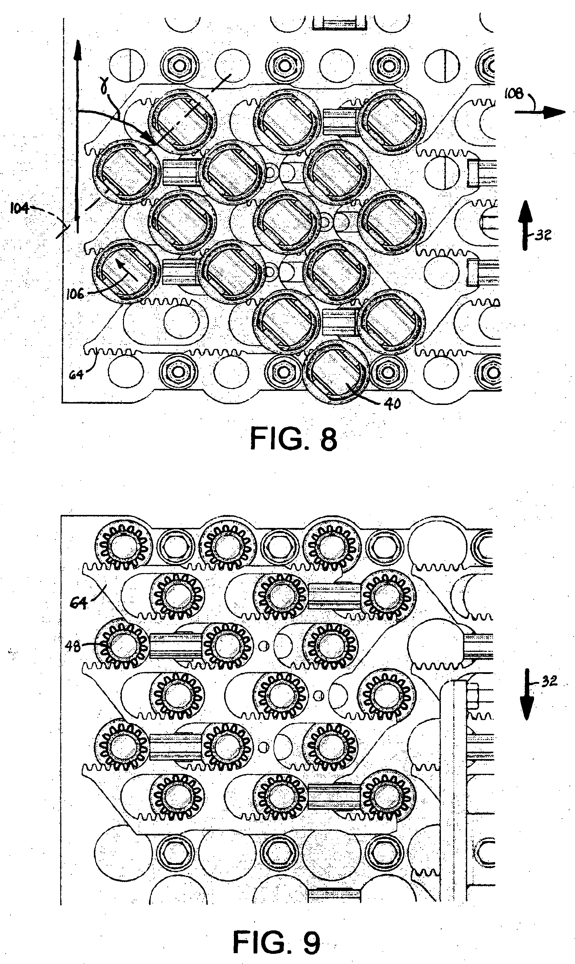

The operation of one of the grid cells of the diverting conveyor system is illustrated in FIGS. 6-9. Each gear plate controls an array of 18 diverting rollers. (Three diverting rollers are omitted at the lower left of FIGS. 6 and 8 to illustrate features of the gear plate better.) In FIGS. 6 and 7, the gear plate 64 is shown translated to an intermediate position in which the diverting roller cartridges 48 are positioned in the middle of the elongated slots 68. With the cartridges rotated to this position, the axes of rotation 104 of the diverting rollers in the grid cell are perpendicular, at right angles, to the direction of belt travel 32. As the conveyor belt advances in the direction of belt travel, the diverting rollers in this orientation rotate in the direction of belt travel and the perpendicularly disposed engaged belt rollers ride along the diverting rollers without rotation. Thus, the belt rollers are deactuated when the diverting rollers are in the orientation of FIGS. 6 and 7. When the gear plate is translated over its range to one extreme with the cartridges positioned at one end of the elongated slots 68 in FIGS. 8 and 9, the axes of rotation 104 of the diverting rollers form an acute angle y measured clockwise from the direction of belt travel. In this orientation, the diverting rollers rotate in the direction of arrow 106, and the belt rollers rotate in the direction of arrow 108 to push conveyed objects toward the right of FIG. 8, as indicated by the arrow 34 in FIG. 3.

As shown in FIG. 3, the outbound singulating conveyor 22 preferably includes a modular plastic conveyor belt 110 having actuated oblique rollers 112. The rollers on each half of the belt rotate in a direction angled toward the center of the belt as indicated by arrows 114 and 115. Packages conveyed atop the singulating belt are driven to the center of the belt as it advances in the direction of belt travel 32. Preferably, the singulating belt runs faster than the sorting belt to increase the separation between consecutive packages along the center line of the singulating conveyor. Thus, the singulating conveyor aligns the packages in a single file for delivery downstream, as illustrated in FIG. 2. The singulating belt may be constructed of Intralox^{®} Series 400 angled roller modules and supported on bearing surfaces, such as a carryway pan, that actuate the oblique belt rollers along the length of the carryway as the belt advances.

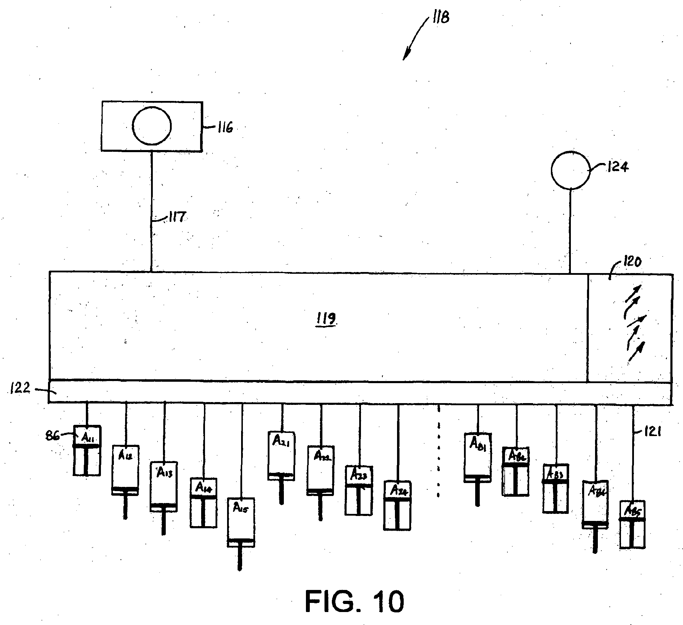

The size and position of each package are sensed by a sensor, such as a digital camera 116 supported above the entrance to the sorting conveyor as shown in FIGS. 1 and 2. Other means for sensing the size and position of each package, such as laser or acoustic systems, may alternatively be used. The video images 117 taken by the camera are fed to a control system 118 including a system controller 119 as shown in FIG.10. The system controller includes a programmable computer, such as a work station, a desktop computer, a programmable logic controller, or an embedded microcontroller. The system controller uses the video images, which are taken at regular intervals, to produce a table of trajectories 120 for each package that is received on the sorting conveyor. The computed trajectories are used to selectively actuate the belt rollers passing through each grid cell to cause the packages to follow their computed trajectories on the sorting conveyor. The actuators 86 for the individual grid cells are controlled over signal lines 121 by an output module 122. The actuators are labeled A₁₁-A₈₅ in FIG. 10 to indicate a grid of 8 rows by 5 columns, or 40 grid cells. The output modules, the actuators, and the rack-and-pinion system form means for selectively controlling each grid cell. The speed of the sorting belt is also needed to compute the trajectory. The speed may be sensed by a tachometer 124 or other sensor and reported to the system controller. Alternatively, the speed setting of the sorting conveyor's drive motor may be used by the controller in computing the trajectories.

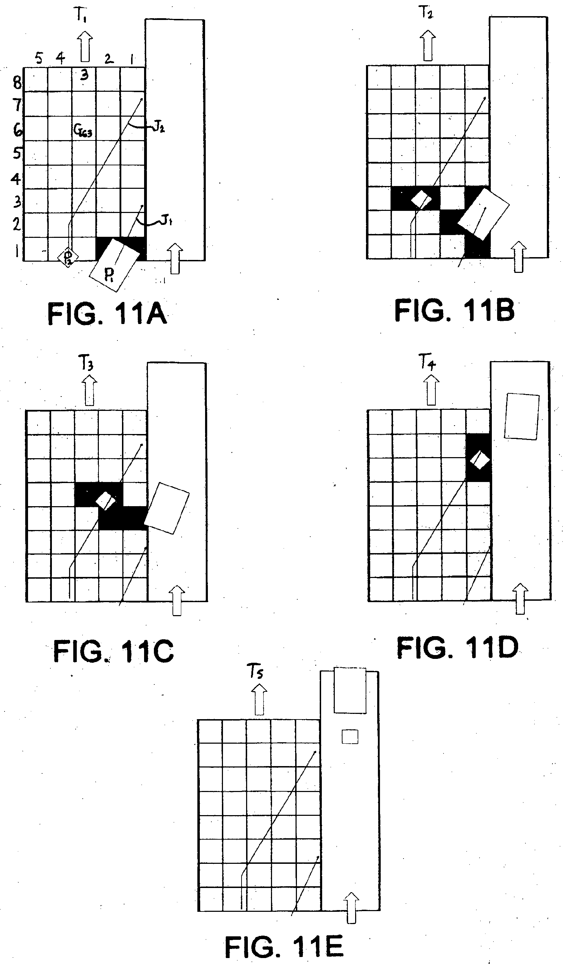

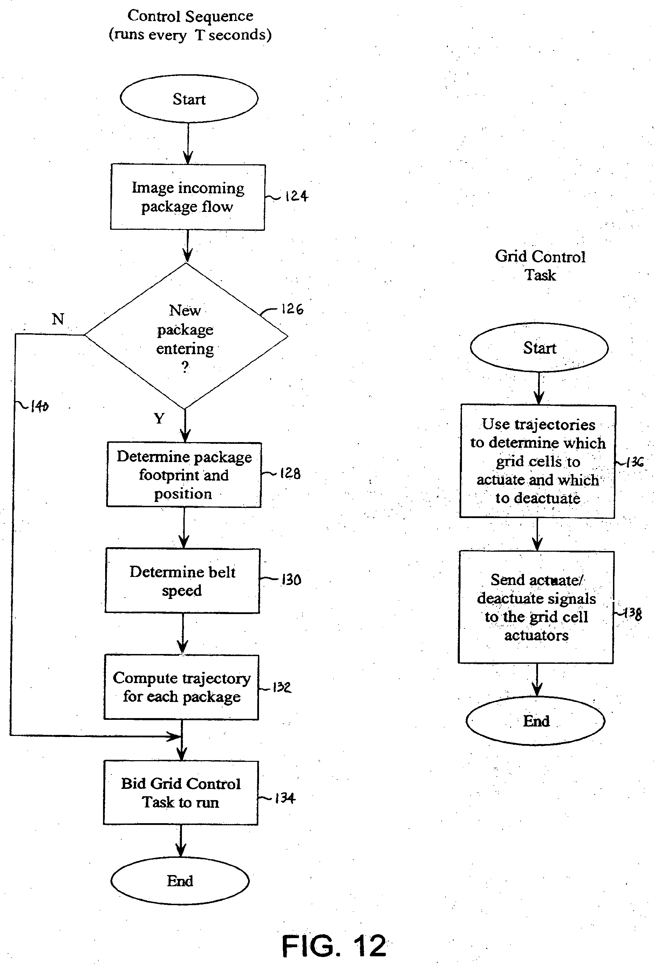

The operation of the sorting conveyor is illustrated in FIG. 11A-11E in conjunction with the flowcharts in FIG. 12. A control sequence software routine runs regularly every T seconds, for example, every 0.5 seconds. As indicated in step 124 of the flowchart, the sequence starts by taking a video image of the incoming package flow. If the controller determines, as in step 126, that a new package, i.e., one not already assigned a trajectory, is entering the sorting conveyor, it determines that package's size, or footprint, and its position on the conveyor as indicated in step 128. The controller then determines the belt speed from a sensor or from a setpoint or a predetermined value as in step 130. From the footprint, position, and speed data, the controller computes a trajectory for each newly entering package (step 132) and saves it in a trajectory table. Each trajectory defines which grid cells are to be actuated for the associated package during consecutive actuation intervals beginning with the interval during which the package enters the sorting conveyor.

FIGS. 11A-11E provide an example of the operations for two packages P₁ and P₂. Each figure represents the actuation status of each grid cell in consecutive intervals beginning at interval start time T₁ in FIG. 11A. The other start times are: T₂=T₁+T; T₃ = T₂ + T; T₄ = T₃ + T; T₅ = T₄ + T, where T is the repetition rate of the control sequence. During the first interval from T₁ to T₂ (FIG. 11A), only grid cells G₁₁ and G₁₂, as indicated by the shaded cells, are actuated to start the package P₁ on its trajectory J₁. This is indicated by step 134 of the flowchart in FIG. 12, which bids a Grid Control Task to run. The Grid Control Task uses the trajectories to determine which grid cells to actuate during the time interval (step 136) and sends corresponding actuate/deactuate signals to the cell actuators (step 138). No grid cells are initially actuated for the package P₂ so that it may continue moving in the direction of belt travel without interfering with the package P₁. During the next interval, from T₂ to T₃ (FIG. 11B), grid cells G₁₁, G₂₁, G₂₂, and G₃₁ are actuated to continue to divert the package P₁ toward the singulating conveyor along the trajectory J₁. In the meantime, because the package P₂ is now largely laterally separated enough from P₁, grid cells G₃₃ and G₃₄ are actuated to start to divert P₂ along its trajectory J₂. During the next interval, T₃ to T₄ (FIG. 11C), only grid cell G₄₁ is actuated for P₁, which is almost entirely transferred off the sorting conveyor. Grid cells G₄₂, G₅₂, and G₅₃ are actuated to continue to urge P₂ along its trajectory. During the next interval, T₄ to T₅ (FIG. 11D), grid cells G₁₆ and G₁₁ are actuated to complete the transfer of P₂ to the singulating conveyor. Because P₁ has already been transferred, no grid cells are actuated for it. Finally, during the final interval shown, T₅ to T₆ (FIG. 11E), no grid cells are actuated because both packages have already been transferred.

As the example suggests, the trajectories for each package may be represented by an indexed array of 5 × 8 matrices of 1's and 0's, where each matrix element corresponds to one of the grid cells and a "1" indicates actuate and a "0" deactuate. The index of each matrix in the array corresponds to the start of the corresponding time interval. The matrices of all the trajectories are logically or'ed together for each index to determine the overall grid-cell actuation map during each interval. The map defines the actuate/deactuate states of the control lines 121 (FIG. 10) to the actuators.

As indicated by the flowchart in FIG. 12, each interval is initiated by the execution of the control sequence, which first images the incoming flow and bids the Grid Control Task to output the actuation signal according to the trajectories. If no new entering packages are detected, the control sequence bypasses the trajectory computation by following the bypass path 140 in the control sequence and proceeds directly to bid the Grid Control Task to run.

Thus, the control sequence software provides means for computing the trajectory for each article, or package, to achieve a rapid and orderly transfer of packages off the side of the sorting conveyor without collisions between packages.

Although the invention has been described in detail with respect to a single version, other versions are possible. For example, the rollers in the sorting conveyor belt could be selectively actuated by mechanisms or systems other than the array of diverting rollers underlying the belt. As one example, the rollers could be made to be magnetically actuated to selectively rotate in each grid cell by electromagnets forming the control elements for the grid. Or each belt roller could include a rotor selectively rotated by an array of individually controlled stators serving as control elements positioned along the carryway and defining the grid cells. Furthermore, the conveyor belt could be dispensed with and articles directly atop the diverting rollers diverted across the sorting conveyor if the diverting rollers were motor-driven rollers individually controlled to rotate or change direction. The flowchart represents one example of a routine controlling the actuation of the grid cells according to computed package trajectories. Other software implementations are possible. For example, the visioning step and the grid control step could be performed at different rates. And the trajectory table could be arranged other than as an array of matrices.

## Claims

1. A sorting system comprising:
a sorting conveyor (20) including:
a plurality of selectively rotatable rollers arranged in a grid (36) of multiple rows (R) and columns (C) of individually controlled grid cells (38) along the sorting conveyor (20); **characterised in that** the system comprises:
a conveyor belt (28) advancing in a direction of belt travel (32) and having a plurality of article- supporting belt rollers (30) extending through the thickness of the conveyor belt (28) and rotatable in a direction transverse to the direction of belt travel and wherein the selectively rotatable rollers have bearing surfaces contacting and selectively rotating the belt rollers (30) passing through the grid cells;
a control system (118) which determines the size and position of each article (P1; P2) on entering the sorting conveyor (20), and which computes a trajectory for each article along the sorting conveyor (20) from the article's entry to its exit from the sorting conveyor from the article's size and position, and which selectively controls the rollers in each grid cell according to the trajectories computed for the articles to actuate and deactuate the rollers to divert articles across the sorting conveyor along the computed trajectories.

2. A sorting system as in claim 1 wherein the control system (118) comprises at least one camera (116) providing an image (117) of the articles.

3. A sorting system as in claim 1 wherein the control system (118) computes non-interfering trajectories for articles entering the conveyor belt side by side.

4. A sorting system as in claim 1 wherein the control system (118) computes trajectories as a function of belt speed in the direction of belt travel.

5. A sorting system as in claim 1 wherein the control system includes an actuator (86) associated with each grid cell that selectively changes the angle of all the selectively rotatable rollers in the grid cell with respect to the belt rollers.

6. A sorting system as in claim 5 wherein the belt rollers rotate on axes parallel to the direction of belt travel and the actuators (86) change the angle of all the diverting rollers (40) in the grid cell from an oblique angle causing the belt rollers to rotate by contact to a right angle disabling rotation of the belt rollers.

7. A sorting system as in claim 1 further comprising an outbound conveyor (22) advancing in the direction of belt travel at a greater speed than and abutting the sorting conveyor side by side along a portion of the length of the sorting conveyor to receive articles diverted from the sorting conveyor and accelerate the articles along the outbound conveyor in the direction of belt travel in single file.

8. A sorting system as in claim 1 wherein the control system saves a trajectory for each newly entering article in a trajectory table.

9. A method for sorting a flow of articles with the system according to claim 1, comprising:
receiving a flow of articles atop belt rollers in a conveyor belt advancing in a direction of belt travel;
imaging the articles to determine their size and positions on entering the conveyor belt;
computing a trajectory for each article along the conveyor belt from the article's entry to its exit from the conveyor belt as a function of its size and position;
selectively actuating and deactuating the belt rollers to rotate transverse to the direction of belt travel according to the trajectories to divert the articles across the conveyor belt along the trajectories.

10. The method of claim 9 further comprising establishing a stationary grid of individually controlled grid cells along the conveyor belt to selectively actuate the belt rollers passing pass through the grid cells.

11. The method of claim 9 comprising saving a trajectory for each newly entering article in a trajectory table.

## Patentansprüche

1. Sortiersystem, umfassend:
einen Sortierförderer (20) einschließlich:
einer Mehrzahl von selektiv drehbaren Rollen, die in einem Gitter (36) von mehreren Reihen (R) und Spalten (C) von individuell gesteuerten Gitterzellen (38) entlang des Sortierförderers (20) angeordnet sind; **dadurch gekennzeichnet, dass** das System Folgendes umfasst:
ein Förderband (28), das in einer Bandlaufrichtung (32) vorläuft und eine Mehrzahl von artikelabstützenden Bandrollen (30) aufweist, die durch die Dicke des Förderbands (28) verlaufen und in einer Richtung quer zur Bandlaufrichtung drehbar sind und worin die selektiv drehbaren Rollen Lageroberflächen aufweisen, die die durch die Gitterzellen gelangenden Bandrollen (30) berühren und selektiv drehen;
ein Steuerungssystem (118), das die Größe und Position jedes Artikels (P1; P2) beim Eintritt in den Sortierförderer (20) bestimmt; und das eine Bahn für jeden Artikel entlang des Sortierförderers (20) vom Eintritt des Artikels bis zu seinem Austritt aus dem Sortierförderer anhand der Größe und Position des Artikels berechnet und das die Rollen in jeder Gitterzelle gemäß den für die Artikel berechneten Bahnen selektiv steuert, um die Rollen zu aktivieren und zu deaktivieren, um Artikel über den Sortierförderer entlang der berechneten Bahnen umzulenken.

2. Sortiersystem nach Anspruch 1, worin das Steuerungssystem (118) mindestens eine Kamera (116) umfasst, die ein Bild (117) der Artikel bereitstellt.

3. Sortiersystem nach Anspruch 1, worin das Steuerungssystem (118) sich nicht behindernde Bahnen für nebeneinander in das Förderband eintretende Artikel berechnet.

4. Sortiersystem nach Anspruch 1, worin das Steuerungssystem (118) Bahnen als eine Funktion der Bandgeschwindigkeit in der Bandlaufrichtung berechnet.

5. Sortiersystem nach Anspruch 1, worin das Steuerungssystem einen mit jeder Gitterzelle assoziierten Aktor (86) beinhaltet, der den Winkel aller selektiv drehbaren Rollen in der Gitterzelle mit Bezug auf die Bandrollen selektiv ändert.

6. Sortiersystem nach Anspruch 5, worin sich die Bandrollen auf Achsen parallel zur Bandlaufrichtung drehen und die Aktoren (86) den Winkel aller Umlenkrollen (40) in der Gitterzelle von einem schrägen Winkel, der bewirkt, dass sich die Bandrollen durch Kontakt drehen, in einen rechten Winkel, der die Drehung der Bandrollen deaktiviert, abändern.

7. Sortiersystem nach Anspruch 1, ferner umfassend einen ausgehenden Förderer (22), der in der Bandlaufrichtung mit einer höheren Geschwindigkeit als der und anstoßend an den Sortierförderer nebeneinander entlang eines Abschnitts der Länge des Sortierförderers vorläuft, um vom Sortierförderer umgelenkte Artikel aufzunehmen und die Artikel entlang des ausgehenden Förderers in der Bandlaufrichtung hintereinander zu beschleunigen.

8. Sortiersystem nach Anspruch 1, worin das Steuerungssystem eine Bahn für jeden neu eintretenden Artikel in einem Bahnetikett speichert.

9. Verfahren zum Sortieren eines Flusses von Artikeln mit dem System nach Anspruch 1, umfassend:
Aufnehmen eines Flusses von Artikeln oben auf Bandrollen in einem in einer Bandlaufrichtung vorlaufenden Förderband;
Abbilden der Artikel, um deren Größe und Positionen beim Eintritt in das Förderband zu bestimmen;
Berechnen einer Bahn für jeden Artikel entlang des Förderbands vom Eintritt des Artikels bis zu seinem Austritt aus dem Förderband als eine Funktion seiner Größe und Position;
selektives Aktivieren und Deaktivieren der Bandrollen, damit sie sich quer zur Bandlaufrichtung gemäß den Bahnen drehen, um die Artikel über das Förderband entlang der Bahnen umzulenken.

10. Verfahren nach Anspruch 9, ferner umfassend das Aufbauen eines stationären Gitters von individuell gesteuerten Gitterzellen entlang des Förderbands, um die durch die Gitterzellen gelangenden Bandrollen selektiv zu aktivieren.

11. Verfahren nach Anspruch 9, umfassend das Speichern einer Bahn für jeden neu eintretenden Artikel in einem Bahnetikett.

## Revendications

1. Système de tri comprenant :
un transporteur de tri (20) comprenant :
une pluralité de rouleaux rotatifs de manière sélective disposés sur une grille (36) de plusieurs rangées (R) et colonnes (C) de cellules de grille commandées individuellement (38) le long du transporteur de tri (20) ;
le système étant **caractérisé en ce qu'**il comprend :
une bande transporteuse (28) avançant dans une direction de déplacement de bande (32) et comportant une pluralité de rouleaux de bande de support d'article (30) s'étendant sur l'épaisseur de la bande transporteuse (28) et rotatifs dans une direction transversale à la direction de déplacement de bande, les rouleaux rotatifs de manière sélective ayant des surfaces d'appui venant au contact des rouleaux de bande (30) et faisant tourner de manière sélective lesdits rouleaux passant sur les cellules de grille ;
un système de commande (118) qui détermine la taille et la position de chaque article (P1, P2) à leur arrivée sur le transporteur de tri (20) ; et qui calcule une trajectoire pour chaque article le long du transporteur de tri (20) de l'arrivée de l'article à sa sortie du transporteur de tri, à partir la taille et de la position de l'article, et qui commande de manière sélective les rouleaux sur chaque cellule de grille selon les trajectoires calculées pour les articles afin d'activer et de désactiver les rouleaux pour dévier des articles sur le transporteur de tri le long des trajectoires calculées.

2. Système de tri selon la revendication 1, dans lequel le système de commande (118) comprend au moins une caméra (116) fournissant une image (117) des articles.

3. Système de tri selon la revendication 1, dans lequel le système de commande (118) calcule des trajectoires sans interférence pour des articles arrivant côte à côte sur la bande transporteuse.

4. Système de tri selon la revendication 1, dans lequel le système de commande (118) calcule des trajectoires en fonction d'une vitesse de bande dans la direction de déplacement de bande.

5. Système de tri selon la revendication 1, dans lequel le système de commande comprend un actionneur (86) associé à chaque cellule de grille, qui modifie de manière sélective l'angle de tous les rouleaux rotatifs de manière sélective sur la cellule de grille par rapport aux rouleaux de bande.

6. Système de tri selon la revendication 5, dans lequel les rouleaux de bande tournent sur des axes parallèles à la direction de déplacement de bande, et les actionneurs (86) modifient l'angle de tous les rouleaux de déviation (40) sur la cellule de grille, d'un angle oblique provoquant la mise en rotation des rouleaux de bande par contact à un angle droit provoquant l'arrêt de la rotation des rouleaux de bande.

7. Système de tri selon la revendication 1, comprenant en outre un transporteur de sortie (22) avançant dans la direction de déplacement de bande à une vitesse supérieure à celle du transporteur de tri et côte à côte en butée le long d'une partie de la longueur du transporteur de tri afin de recevoir des articles déviés du transporteur de tri et d'accélérer les articles le long du transporteur de sortie dans la direction de déplacement de bande en file indienne.

8. Système de tri selon la revendication 1, dans lequel le système de commande enregistre, sous un libellé de trajectoire, une trajectoire pour chaque article qui vient d'arriver.

9. Procédé de tri d'un flux d'articles au moyen du système selon la revendication 1, consistant à :
recevoir un flux d'articles sur des rouleaux de bande d'une bande transporteuse avançant dans une direction de déplacement de bande ;
imager les articles pour déterminer leur taille et leur position à leur arrivée sur la bande transporteuse ;
calculer une trajectoire pour chaque article le long de la bande transporteuse de l'arrivée de l'article à sa sortie de la bande transporteuse en fonction de sa taille et de sa position ;
activer et désactiver de manière sélective les rouleaux de bande pour les faire tourner transversalement à la direction de déplacement de bande selon les trajectoires afin de dévier les articles sur la bande transporteuse le long des trajectoires.

10. Procédé selon la revendication 9, consistant en outre à établir une grille fixe de cellules de grille commandées individuellement le long de la bande transporteuse afin d'activer de manière sélective les rouleaux de bande passant sur les cellules de grille.

11. Procédé selon la revendication 9, consistant à enregistrer, sous un libellé de trajectoire, une trajectoire pour chaque article qui vient d'arriver.
